# EUROPEAN PATENT APPLICATION

(11) **EP 2 796 735 A1**
(43) Date of publication of application: **29.10.2014**
(21) Application number: 12859574.1
(22) Date of filing: 15.10.2012
(51) Int. Cl.: F16C 11/06

(54) **DUST COVER FOR BALL JOINT**

(30) Priority: 22.12.2011 JP 2011281173
(71) Applicant: NOK Corporation, Tokyo 105-8585 (JP)
(72) Inventor: SATO Noriaki, Makinohara-shi Shizuoka 421-0532 (JP); ITO Shin, Makinohara-shi Shizuoka 421-0532 (JP)
(74) Representative: TBK
(86) International application number: PCT/JP2012/076569
(87) International publication number: WO 2013/094289

(57) **Abstract**

In a dust cover for a ball joint structured such that a spherical head portion formed in one end of a ball stud is retained within a socket, a shaft in the other end of the ball stud is fastened and fixed to a knuckle, a one end large-diameter opening portion formed approximately as a C-shaped form in its sectional is fixed and retained within an annular groove portion which is formed in an outer peripheral surface of the socket so as to be comparted by a collar portion, by double wound circlips, and the other end small-diameter opening portion is retained to the shaft, and made of an elastic material, a small-diameter step portion is provided in a bottom portion of the collar portion side of an annular accommodating groove in which the double wound circlips of the large-diameter opening portion is accommodated.

## Description

### BACKGROUND OF THE INVENTION

### Field of the Invention

The present invention relates to a dust cover for a ball joint.

Further, the present invention relates to a dust cover for a ball joint which is used in an automobile suspension device or a steering device.

### Description of the Conventional Art

Conventionally, as a ball joint to which a dust cover is installed for the purpose of a dust prevention and a water prevention in a ball joint coupling portion, there has been known a dust cover for a ball joint which is described in Fig. 4 (patent document 1).

In a seal structure of this kind of dust cover for the ball joint, a spherical head portion 200 formed in one end of a ball stud 100 is retained within a socket 300.

Further, a shaft 400 in the other end of the ball stud 100 is fastened and fixed to a knuckle 500.

On the other hand, a one end large-diameter opening portion 800 formed as an approximately C-shaped cross sectional form of a dust cover 600 made of a rubber-like elastic material is fixed and retained within an annular groove portion 310 which is formed in an outer peripheral surface of the socket 300 by a double wound circlip 700, and the other end small-diameter opening portion 150 is retained to the shaft 400.

The double wound circlip 700 employs a circlip which is formed approximately as a rectangular cross sectional shape.

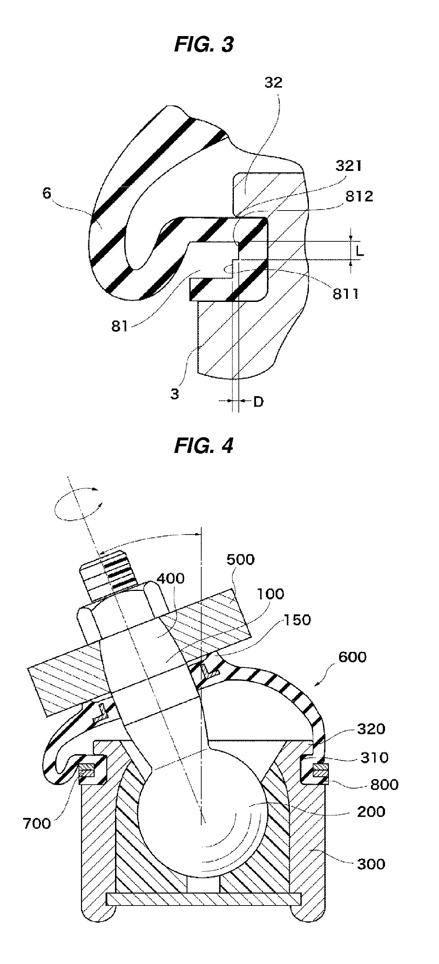

In this kind of conventional dust cover 600, in the case that the ball stud 100 oscillates in a state in which the ball stud 100 is inclined as shown in Fig. 4, a large-diameter opening portion 800 repeatedly extends and contracts between a collar portion 320 of the socket 300 and the circlip 700.

As a result, a crack is generated in the large-diameter opening portion 800, and there is a risk that malfunction of the dust cover 600 is caused.

Particularly under a low temperature condition in which a rubber physicality of a rubber material of the dust cover 600 is lowered, the problem that the crack is generated is significant.

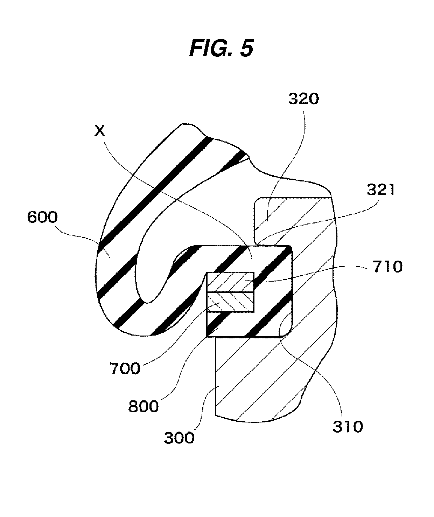

It is thought that the crack in the large-diameter opening portion 800 is generated by a matter that a bending operation is repeated in an area X which is sandwiched between an inner peripheral side corner portion 710 of the double wound circlip 700 and an outer peripheral edge portion 321 of the collar portion 320, in the contracted side of the dust cover 600, and a bending operation is repeated in the area X which is sandwiched between the inner peripheral side corner portion 710 of the double wound circlip 700 and the outer peripheral edge portion 321 of the collar portion 320, in the extended side of the dust cover 600, as shown in Fig. 5.

Accordingly, there can be thought that fatigue breakage in the area X is prevented by making a fastening amount of the double wound circlip 700 smaller, however, in the case that the fastening amount of the double wound circlip 700 is made smaller, a problem that a sealing performance in the large-diameter opening portion 800 side is lowered has been brought about.

### Prior Art

### Patent Document

Patent Document 1: Japanese Unexamined Patent Publication No. 2008-223932

### SUMMARY OF THE INVENTION

### Problem to be Solved by the Invention

The present invention is made by taking the problem mentioned above into consideration, and an object of the present invention is to provide a dust cover for a ball joint which can effectively solve the problem that the crack is generated in the large-diameter opening portion of the dust cover, without lowering the sealing performance in the large-diameter opening portion side.

### Means for Solving the Problem

A dust cover for a ball joint according to the present invention is a dust cover for a ball joint structured such that a spherical head portion formed in one end of a ball stud is retained within a socket, a shaft in the other end of the ball stud is fastened and fixed to a knuckle, a one end large-diameter opening portion formed approximately as a C-shaped form in its sectional is fixed and retained within an annular groove portion which is formed in an outer peripheral surface of the socket so as to be comparted by a collar portion, by double wound circlips, and the other end small-diameter opening portion is retained to the shaft, and made of an elastic material, wherein a small-diameter step portion is provided in a bottom portion of the collar portion side of an annular accommodating groove in which the double wound circlips of the large-diameter opening portion is accommodated.

### Effect of the Invention

The present invention achieves effects as described below.

According to the dust cover for the ball joint of the invention described in a first aspect, it is possible to dissolve the problem that the crack is generated in the large-diameter opening portion of the dust cover, without lowering the sealing performance in the large-diameter opening portion side.

Further, according to the dust cover for the ball joint of the invention described in a second aspect, it is possible to more securely dissolve the problem that the crack is generated in the large-diameter opening portion of the dust cover, without lowering the sealing performance in the large-diameter opening portion side.

Further, according to the dust cover for the ball joint of the invention described in a third aspect, it is possible to more effectively dissolve the problem that the crack is generated in the large-diameter opening portion of the dust cover, without lowering the sealing performance in the large-diameter opening portion side.

### BRIEF EXPLANATION OF THE DRAWINGS

Fig. 1 is a vertical cross sectional view of a dust cover for a ball joint according to the present invention;
Fig. 2 is an enlarged view of a substantial part in Fig. 1;
Fig. 3 is a view showing a state before a circlip in Fig. 2 is installed;
Fig. 4 is a vertical cross sectional view of a dust cover for a ball joint according to a prior art; and
Fig. 5 is an enlarged view of a substantial part in Fig. 5.

### Description of Reference Numerals

- 1: ball stud
- 2: spherical head portion
- 3: socket
- 4: shaft
- 5: knuckle
- 6: dust cover
- 7: circlip
- 8: large-diameter opening portion
- 15: small-diameter opening portion
- 31: groove portion
- 32: collar portion
- 81: accommodating groove
- 811: bottom portion
- 812: small-diameter step portion

### DETAILED DESCRIPTION OF PREFERRED EMBODIMENT

A description will be given of an embodiment for executing the present invention.

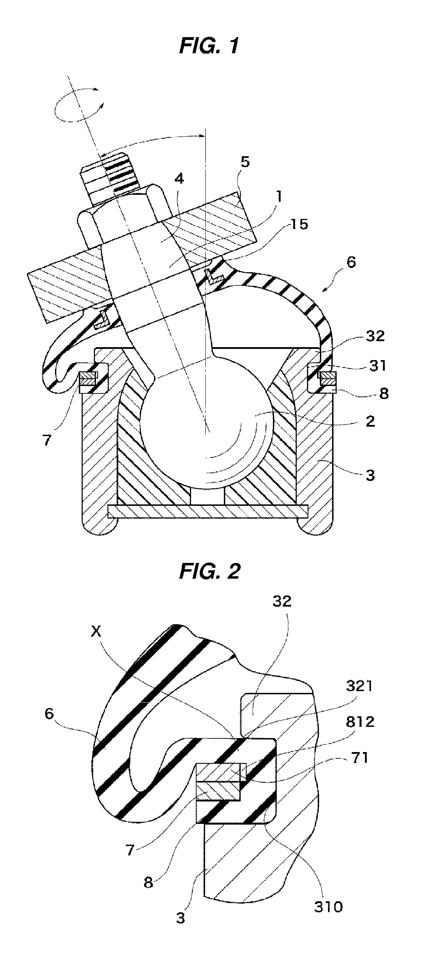

As shown in Figs. 1 to 3, a dust cover for a ball joint according to the present invention is structured such that a spherical head portion 2 formed in one end of a ball stud 1 is retained within a socket 3.

Further, a shaft 4 in the other end of the ball stud 1 is fastened and fixed to a knuckle 5.

On the other hand, a one end large-diameter opening portion 8 formed approximately as a C-shaped form in its cross section in a dust cover 6 made of an elastic material is fixed and retained within an annular groove portion 31 which is formed in an outer peripheral surface of the socket 3 so as to be comparted by a collar portion 32, by double wound circlips 7 and 7, and a small-diameter opening portion 15 in the other end side is retained to the shaft 4.

The circlips 7 and 7 are constructed by a circlip which is provided with a spring property, is made of a metal material and is formed approximately as a rectangular shape in its cross section.

Further, a small-diameter step portion 812 is formed in a bottom portion 811 in a collar portion 32 side of an annular accommodating groove 81 in which the double wound circlips 7 and 7 are accommodated in the large-diameter opening portion 8.

As a result, since a compression distortion is reduced in an area X which is sandwiched between an inner peripheral side corner portion 71 of the circlip 7 in the collar portion 32 side (an upper side in the drawing) of the double wound circlips 7 and 7 and an outer peripheral edge 321 of the collar portion 32, it is possible to prevent fatigue breakage.

Further, it is preferable to design so that an axial length L of the small-diameter step portion 812 is approximately equal to a thickness of one circlip 7.

As a result, it is possible to prevent the fatigue breakage in the area X without deteriorating a retaining function of the one circlip 7 (in a lower side of the drawing) in relation to the large-diameter opening portion 8.

Further, it is preferable that a step D of the small-diameter step portion 812 is in a range between 0.05 and 2 mm.

In the case that the step D becomes smaller than 0.05 mm, the reduction of the compression distortion is limited in the area X which is sandwiched between the inner peripheral side corner portion 71 of the circlip 7 and the outer peripheral edge portion 321 of the collar portion 32. Accordingly, it is hard to sufficiently suppress the fatigue breakage.

In the case that the step D becomes equal to or more than 2 mm, the sealing performance in the large-diameter opening portion 8 side tends to be lowered.

The step D appropriately selects a preferable magnitude while taking into consideration a magnitude and a material of the dust cover, and a fastening margin of the circlip 7.

Further, a material of the dust cover 6 can be appropriately selected from a rubber-like elastic material, for example, a chloroprene or thermoplastic elastomer, for example, a polyester elastomer and a thermoplastic polyurethane in correspondence to an intended use so as to be used.

Further, a dust lip coming into elastic contact with the knuckle 5 is provided in the small-diameter opening portion 15, and a reinforcing ring is buried in the small-diameter opening portion 15.

Accordingly, it is possible to more effectively prevent the dust from intruding into the dust cover 6 from the external portion.

Further, in a material of the reinforcing ring, a metal material or a resin material is appropriately selected and used in correspondence to an intended use.

Further, it goes without saying that the present invention is not limited to the best mode for carrying out the invention mentioned above, but can employ the other various structures without deflecting from the scope of the present invention.

### Industrial Applicability

The invention can be used in the ball joint which is used in the suspension device and the steering device of the motor vehicle.

## Claims

1. A dust cover (6) for a ball joint structured such that a spherical head portion (2) formed in one end of a ball stud (1) is retained within a socket (3), a shaft (4) in the other end of said ball stud (1) is fastened and fixed to a knuckle (5), a one end large-diameter opening portion (8) formed approximately as a C-shaped form in its sectional is fixed and retained within an annular groove portion (31) which is formed in an outer peripheral surface of said socket (3) so as to be comparted by a collar portion (32), by double wound circlips (7, 7), and the other end small-diameter opening portion (15) is retained to said shaft (4), and made of an elastic material, wherein a small-diameter step portion (812) is provided in a bottom portion (811) of said collar portion (32) side of an annular accommodating groove (81) in which said double wound circlips (7, 7) of said large-diameter opening portion (8) is accommodated.

2. The dust cover for the ball joint according to claim 1, wherein an axial length (L) of said small-diameter step portion (812) is approximately equal to a thickness of one of said circlips (7).

3. The dust cover for the ball joint according to claim 1 or 2, wherein a step (D) of said small-diameter step portion (812) is in a range between 0.05 and 2 mm.
